# EUROPÄISCHE PATENTANMELDUNG

(11) **EP 4 793 120 A1**
(43) Veröffentlichungstag der Anmeldung: **19.08.2026**
(21) Anmeldenummer: 26157284.6
(22) Anmeldetag: 09.02.2026
(51) Int. Cl.: B60W 10/20, B60W 10/184, B60W 30/06, B60K 1/02, B60K 7/00, B60W 10/08, B60W 30/02, B60W 50/00

(54) **KRAFTFAHRZEUG, FAHRZEUGBEWEGUNGSTEUERUNGSSYSTEM UND VERFAHREN ZUM BETREIBEN EINES ZWEISPURIGEN KRAFTFAHRZEUGS MIT EINEM FAHRZEUGBEWEGUNGSTEUERUNGSSYSTEM**

(30) Priorität: 12.02.2025 BE 202505081
(71) Anmelder: thyssenkrupp Presta AG, 9492 Eschen (LI); thyssenkrupp AG, 45143 Essen (DE)
(72) Erfinder: Lapis, Leonard, 9466 Sennwald (CH); Fazekas, Dr. Csaba, 1141 Budapest (HU); Áron, Sólyomvári, 7635 Pécs (HU); Csikja, Rudolf, 2072 Zsambek (HU); Major, Attila, 1143 Budapest (HU); Szegedi, Ágnes Cintia, 6422 Tompa (HU)
(74) Vertreter: thyssenkrupp Intellectual Property GmbH

(57) **Zusammenfassung**

Die vorliegende Erfindung betrifft ein Verfahren zum Betreiben eines zweispurigen Kraftfahrzeugs (1) mit einem Fahrzeugbewegungsteuerungssystem (2), wobei das Fahrzeugbewegungsteuerungssystem (2) für das Kraftfahrzeug (1) eine Soll-Trajektorie bestimmt, und zur Einhaltung der Soll-Trajektorie (3) steuernd auf Aktuatoren (4) des Kraftfahrzeugs (1) einwirkt. Das Fahrzeugbewegungsteuerungssystem (2) umfasst einen Referenzgenerator (5), eine Steuerungseinheit (6) und eine Zuweisungseinheit (7), wobei der Referenzgenerator (5) die Soll-Trajektorie erzeugt, die Steuerungseinheit (6) die erzeugte Soll-Trajektorie in Soll-Größen überführt, die an einem Gravizentrum (9) des Kraftfahrzeugs (1) aus der Soll-Trajektorie resultieren, und die Zuweisungseinheit (7) diejenigen Aktuatoren (4) des Kraftfahrzeugs (1) bestimmt, die zur Erreichung der Soll-Größen angesteuert werden sollen.

Ferner betrifft die Erfindung ein Fahrzeugbewegungsteuerungssystem (2), das ausgebildet ist, in einem Kraftfahrzeug (1) ein vorstehendes Verfahren auszuführen, und ein Kraftfahrzeug (1), das ausgebildet ist, gemäß einem vorstehenden Verfahren betrieben zu werden.

## Beschreibung

Die Erfindung betrifft ein Verfahren zum Betreiben eines zweispurigen Kraftfahrzeugs mit einem Fahrzeugbewegungsteuerungssystem, wobei das Fahrzeugbewegungsteuerungssystem für das Kraftfahrzeug eine Soll-Trajektorie, der das Kraftfahrzeug folgen soll, bestimmt, und wobei das Fahrzeugbewegungsteuerungssystem zur Einhaltung der Soll-Trajektorie steuernd auf Aktuatoren des Kraftfahrzeugs, welche die Trajektorie beeinflussen, einwirkt. Des Weiteren betrifft die Erfindung ein Fahrzeugbewegungsteuerungssystem sowie ein Kraftfahrzeug mit einem Fahrzeugbewegungsteuerungssystem. Ein Fahrzeugbewegungsteuerungssystem ist insbesondere ein Vehicle-Motion-Control-System.

Verfahren zur Bestimmung einer in einer zweidimensionalen Ebene verlaufenden Trajektorie eines gelenkten Kraftfahrzeugs, wobei die Trajektorie auch als Bahnlinie bezeichnet wird, sind aus dem Stand der Technik bekannt. Insbesondere sind derartige Verfahren auf dem Gebiet der Steuerung und/oder Regelung von beweglichen Körpern, insbesondere Kraftfahrzeugen, bekannt, bei denen durch eine Sollwertvorgabe des zurückzulegenden Weges in einer zweidimensionalen Ebene die Trajektorie systematisch geplant wird.

Beispielsweise ist aus der EP 1 958 036 B1 ein Verfahren zur Bestimmung einer in einer zweidimensionalen Ebene verlaufenden Bahnlinie eines Kraftfahrzeugs für eine geführte Bewegung des Kraftfahrzeugs mit Hilfe eines Fahrerassistenzsystems bekannt. Dabei soll eine Bahnlinie in einer zweidimensionalen Ebene bestimmt werden, die einen Anfangs- und Endzustand des Fahrzeugs verbindet, wobei sich die Bahnlinie aus mehreren Teilstrecken zusammensetzt, die in Bezug auf Richtung und Krümmung kontinuierlich sind, um eine gleichmäßige und kollisionsfreie Bewegung des Fahrzeugs zu gewährleisten.

Des Weiteren wird in der WO 2021/079338 A1 für ein automatisiertes Fahren eines Fahrzeugs bei niedrigen Geschwindigkeiten ein System zur Planung und Steuerung einer Fahrzeugtrajektorie beschrieben. Das System nutzt dabei eine modellprädiktive Einheit zur Planung einer Fahrzeugtrajektorie und eine Steuereinheit, wobei zur Umsetzung der Fahrzeugtrajektorie Steuerbefehle für ein elektrisches Servolenksystem, ein Bremssystem und einen Antriebsstrang des Fahrzeugs generiert werden.

Außerdem beschreibt die CN 110466604 A ein Verfahren für eine Differentialantriebslenkung für Elektrofahrzeuge, die von einem Radnabenmotor angetrieben werden. Bei dem Verfahren werden unterschiedliche Antriebsmomente an den linken und rechten Vorderrädern verwendet, um das Elektrofahrzeug zu lenken, insbesondere wenn das herkömmliche Lenksystem ausfällt. Zudem soll durch das Verfahren die Stabilität des Fahrzeugs in verschiedenen Fahrsituationen wie bei einem Durchfahren von scharfen Kurven oder bei einem plötzlichen Bremsen verbessern. Dabei wird ein Regelsystem beschrieben, das auf einem Referenzmodell basiert, um die Stabilitätsgrenzen zu bestimmen und sicherzustellen, dass das Fahrzeug innerhalb dieser Grenzen bleibt.

Zudem ist aus der DE 10 2008 001 993 B4 ein Verfahren zur Regelung eines fahrdynamischen Verhaltens eines Kraftfahrzeugs bekannt. Ziel des Verfahrens ist es, den maximalen ausgenutzten Kraftschlussbeiwert an den Rädern zu minimieren. Dabei kann für unterschiedliche Stelleinrichtungen des Kraftfahrzeugs die Intensität der Eingriffe der Stelleinrichtungen festgelegt werden. Dabei wird insbesondere eine komfortorientierte Verteilung der Eingriffe vorgeschlagen, indem die Eingriffe so gesteuert werden, dass komfortbeeinträchtigende Stellvorrichtungen weniger intensiv genutzt werden.

Ferner offenbart die US 11,673,582 B1 ein Steuerungssystem für Fahrzeuge, das die Steuerung eines Fahrzeugs ermöglicht, wenn dessen elektrisches Servolenkungssystem ausfällt. Das System verwendet mehrere redundante Aktuatoren, um die Fahrzeugräder zu steuern und das Fahrzeug auf einer geplanten Trajektorie zu halten. Wenn das Servolenkungssystem nicht funktioniert, werden in Echtzeit Korrektureinschränkungen berechnet, um weiterhin die Steuerung des Fahrzeugs zu gewährleisten. Zu den redundanten Aktuatoren gehören Systeme für eine aktive Hinterachslenkung, Drehmomentverteilung und differenzielles Bremsen.

Vor diesem Hintergrund ist es eine Aufgabe der vorliegenden Erfindung, eine Fahrzeugstabilität weiter zur erhöhen und ein Einhalten einer Soll-Trajektorie eines Kraftfahrzeugs zu verbessern, insbesondere durch eine verbesserte Bestimmung der anzusteuernden Aktuatoren und/oder eine verbesserte Steuerung der bestimmten Aktuatoren.

Zur Lösung dieser Aufgabe werden ein Verfahren gemäß Anspruch 1 sowie ein Fahrzeugbewegungsteuerungssystem und ein Kraftfahrzeug mit einem Fahrzeugbewegungsteuerungssystem gemäß den nebengeordneten Ansprüchen vorgeschlagen.

Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines zweispurigen Kraftfahrzeugs mit einem Fahrzeugbewegungsteuerungssystem vor, wobei das Fahrzeugbewegungsteuerungssystem für das Kraftfahrzeug eine Soll-Trajektorie, der das Kraftfahrzeug folgen soll, bestimmt und zur Einhaltung der Soll-Trajektorie steuernd auf Aktuatoren des Kraftfahrzeugs, welche die Trajektorie des Kraftfahrzeugs beeinflussen, einwirkt. Das Fahrzeugbewegungsteuerungssystem umfasst einen Referenzgenerator, eine Steuerungseinheit und eine Zuweisungseinheit, wobei der Referenzgenerator in einem Fahrbetrieb des Kraftfahrzeugs die Soll-Trajektorie erzeugt, insbesondere basierend auf einer von einem Fahrzeugnutzer oder einem Assistenzsystem vorgegebenen Fahrtrichtungsvorgabe, die Steuerungseinheit die erzeugte Soll-Trajektorie in Soll-Größen, insbesondere in Soll-Kräfte und/oder in Soll-Drehmomente und/oder in Soll-Beschleunigungen und/oder in Soll-Gierraten, überführt, die an einem Gravizentrum des Kraftfahrzeugs aus der Soll-Trajektorie resultieren, und wobei die Zuweisungseinheit diejenigen Aktuatoren des Kraftfahrzeugs bestimmt, die zur Erreichung der für das Gravizentrum des Kraftfahrzeugs ermittelten Soll-Größen angesteuert werden sollen. Insbesondere überträgt die Zuweisungseinheit auch die von den Aktuatoren umzusetzenden Kräfte, Momente und/oder Radlenkwinkel an die bestimmten Aktuatoren. Vorteilhafterweise stellt die Zuweisungseinheit zudem eine Information bereit, wenn die Soll-Größen nicht realisierbar sind, sich also insbesondere kein Aktuator oder keine Kombination von Aktuatoren bestimmen lässt, durch deren Ansteuerung sich die Soll-Größen realisieren lassen. Vorteilhafterweise wird diese Information zur weiteren Verarbeitung bereitgestellt, insbesondere zur Anpassung der Soll-Trajektorie, weiter insbesondere zur Reduzierung der Fahrzeuggeschwindigkeit.

Die Aufgabe des Fahrzeugbewegungsteuerungssystems umfasst also insbesondere, die Bewegung des Kraftfahrzeugs so zu steuern, dass vorgegebene Eigenschaften und somit eine vorgegebene Trajektorie umgesetzt werden. Insbesondere passt das Fahrzeugbewegungsteuerungssystem von einem Fahrzeugnutzer und/oder von einem Fahrassistenzsystem vorgegebene Bedienbefehle zum Steuern des Kraftfahrzeugs an, um die aus den Bedienbefehlen resultierende Bewegung des Fahrzeugs zu stabilisieren und dabei so nah wie möglich an der durch die Bedienbefehle des Fahrzeugnutzers vorgegebenen Trajektorie zu bleiben. Weiter berechnet das Fahrzeugbewegungsteuerungssystem vorteilhafterweise während eines autonomen Fahrens eine erforderliche Fahrtroute und somit eine Soll-Trajektorie, die dann von den Aktuatoren des Kraftfahrzeugs durch entsprechende Vorgaben von dem Fahrzeugbewegungsteuerungssystem umgesetzt wird.

Die Architektur der Fahrzeugbewegungsteuerungssystem, die vorteilhafterweise einen Referenzgenerator, eine Steuerungseinheit und eine Zuweisungseinheit als separate Einheiten umfasst, bildet dabei vorteilhafterweise eine Basis für eine besonders gute Auswahl der anzusteuernden Aktuatoren und für eine besonders gute Regelung zur Einhaltung der Soll-Trajektorie und damit zur Stabilisierung des Kraftfahrzeug. Der Referenzgenerator erzeugt dabei insbesondere die erforderliche Soll-Trajektorie für das Kraftfahrzeug, wobei diese Soll-Trajektorie aus Sicht der Fahrzeugdynamik insbesondere stabil sein muss. Die Steuereinheit, die insbesondere eine Fahrwerksbewegungssteuerung sein oder umfassen kann, wandelt die erforderliche Trajektorie vorteilhafterweise in die aus der Trajektorie resultierenden Soll-Größen am Schwerpunkt des Kraftfahrzeugs, dem Gravizentrum, um. Diese Soll-Größen umfassen insbesondere Soll-Beschleunigungswerte, Soll-Kräfte, Soll-Momente und/oder Soll-Gierraten am Gravizentrum. Basierend auf den Soll-Größen werden dann vorteilhafterweise die Steuergrößen für die anzusteuernden Aktuatoren des Kraftfahrzeugs zur Einhaltung der Soll-Trajektorie bestimmt, was vorzugsweise durch die Zuweisungseinheit erfolgt. Die Zuweisungseinheit verteilt dann vorteilhafterweise die Steuergrößen, insbesondere die erforderlichen Kräfte und/oder Momente und/oder Radlenkwinkel auf die Aktuatoren des Kraftfahrzeugs, wobei vorteilhafterweise, eine Information zurückgegeben wird, wenn die Soll-Größen nicht durch eine Ansteuerung der Aktuatoren realisierbar sind. Vorteilhafterweise können dabei die einzelnen Einheiten Referenzgenerator, Steuerungseinheit und Zuweisungseinheit auch einzeln angepasst werden.

Insbesondere ist vorgesehen, dass die Zuweisungseinheit die Soll-Größen, die die Steuereinheit für den Schwerpunkt des Kraftfahrzeugs ermittelt hat, in Steuergrößen für die bestimmten Aktuatoren überführt. Die Zuweisungseinheit des Fahrzeugbewegungsteuerungssystems überträgt dann vorteilhafterweise für die bestimmten Aktuatoren, die zur Erreichung der Soll-Trajektorie angesteuert werden sollen, jeweils die entsprechende Steuergröße an eine dem jeweiligen Aktuator zugeordnete Aktuatorsteuereinheit. Die dem jeweiligen Aktuator zugeordnete Aktuatorsteuereinheit steuert den dieser Aktuatorsteuereinheit zugeordneten Aktuator dann an, sodass das Kraftfahrzeug sich vorteilhafterweise entsprechend der Soll-Trajektorie bewegt. Vorteilhafterweise empfängt die Zuweisungseinheit also die geforderten Soll-Größen, insbesondere die Beschleunigungssignale, von der Steuerungseinheit des Fahrzeugbewegungsteuerungssystems und sendet Aktuatorsignale an die Aktuatorsteuereinheiten. Die Aktuatorsteuereinheiten erzeugen dann, insbesondere basierend auf einem entsprechend hinterlegten Fahrzeugmodell, die für den Schwerpunkt des Kraftfahrzeug zu erzielenden Soll-Größen. Insbesondere sendet die Zuweisungseinheit Radkräfte an Brems- und/oder Antriebssteuereinheiten als Aktuatoreinheiten, die diese umsetzen, und Straßenradwinkel an die Lenksystem-Steuereinheiten als Aktuatoreinheiten, die diese umsetzen.

Eine vorteilhafte Ausgestaltung sieht des Weiteren vor, dass das Fahrzeugbewegungsteuerungssystem des Weiteren eine Parksteuerungseinheit umfasst. Diese Parksteuerungseinheit ist vorteilhafterweise nur bei der Durchführung von Parkmanövern aktiv. In einem Fahrbetrieb des Kraftfahrzeugs, also einem Betrieb des Kraftfahrzeugs, bei dem kein Parkmanöver durchgeführt wird, sind vorteilhafterweise die Steuerungseinheit und die Zuweisungseinheit zum Steuern der Bewegung des Kraftfahrzeugs zuständig. Die Parksteuerungseinheit ist dann insbesondere inaktiv. Vorteilhafterweise stellt der Referenzgenerator die Soll-Trajektorie sowohl im Fahrbetrieb des Kraftfahrzeugs, als auch in einem Parkmanöver-Betrieb des Kraftfahrzeugs bereit. Die Soll-Trajektorie bedeutet im Fahrbetrieb insbesondere Geschwindigkeiten und Gierwinkelraten und in dem Parkmanöver-Betrieb insbesondere Geschwindigkeit und Position beziehungsweise Ausrichtungswinkel (heading angle). Der Referenzgenerator gibt die Soll-Trajektorie daher vorteilhafterweise in diesen Dimensionen aus.

Vorteilhafterweise berechnet dann die Steuerungseinheit die Soll-Größen am Schwerpunkt (COG; COG: Center Of Gravity) des Kraftfahrzeugs basierend auf den die Soll-Trajektorie beschreibenden Werten und gibt die Soll-Größen aus, insbesondere an die Zuweisungseinheit. Weiter vorteilhaft wandelt die Zuweisungseinheit, die auch als Steuerzuteilungseinheit bezeichnet werden kann, anschließend diese Soll-Größen in spezifische "Aktuatorsignale", die Steuergrößen, um, wie insbesondere Kraft, Drehmoment und Lenkwinkel. Für einen Parkmanöver-Betrieb ist dabei vorteilhafterweise die spezielle Parksteuerungseinheit vorgesehen, welche insbesondere die Längsgeschwindigkeit und die Lenkwinkel des Kraftfahrzeugs direkt auf Basis der Daten der Soll-Trajektorie berechnet und dabei vorteilhafterweise einen separaten Controller (MPC-Modul) für die Längs- und Querbewegung verwendet, insbesondere einen longitudinalen Regler und einen lateralen Regler.

Gemäß einer weiteren vorteilhaften Ausgestaltung des Verfahren beschreibt ein das Kraftfahrzeug beschreibendes Fahrzeugmodell, insbesondere ein Zweispurmodell, einen Zusammenhang zwischen definierten Soll-Größen und zuweisbaren Aktuatoren.

Vorteilhafterweise beruht also die Zuweisung der Aktuatoren durch die Zuweisungseinheit zumindest teilweise auf diesem hinterlegten Fahrzeugmodell. Ein Zweispurmodell, auch Gesamtfahrzeugmodell genannt, liefert vorteilhafterweise für zahlreiche fahrdynamische Problemstellungen so realitätsnahe Ergebnisse, dass auf der Basis der Ergebnisse des Zweispurmodells vorteilhafterweise eine geeignete Zuweisung der Aktuatoren erfolgen kann. Das Zweispurmodell ist dabei insbesondere als nichtlineares Zweispurmodell ausgebildet. Mit dem Zweispurmodell können insbesondere ein Eigenlenkverhalten des Kraftfahrzeugs, ein Fahrerverhalten, Fahrzeugparameter, Aufbaubewegungsparameter, Reifenkräfte, Reifenmomente, Radwinkel und/oder Regelsysteme für die Querdynamik des Kraftfahrzeugs beschrieben werden.

Vorteilhafterweise wird anhand von hinterlegten Gleichungen, insbesondere anhand von in dem Fahrzeugmodell hinterlegten Gleichungen, für die zuweisbaren Aktuatoren geprüft, ob für eine Erreichung der Soll-Größen unter Nutzung der bestimmten Aktuatoren fahrdynamische Rahmenbedingungen des jeweiligen Aktuators eingehalten werden. Dabei werden vorteilhaferweise die bestimmten Aktuatoren derart angesteuert, dass die fahrdynamischen Rahmenbedingungen eines jeweiligen bestimmten Aktuators eingehalten werden. Auf diese Weise wird die Fahrzeugstabilität weiter erhöht. Sollte sich für eine Soll-Trajektorie ergeben, dass diese zu einer Fahrzeuginstabilität führen würde, passt der Referenzgenerator vorteilhafterweise die Soll-Trajektorie entsprechend an.

Eine weiter vorteilhafte Ausgestaltung des Verfahrens sieht vor, dass unter Nutzung einer Kostenfunktion eine Menge von Kombinationen von Aktuatoren des Kraftfahrzeugs bestimmt wird, wobei die Aktuatoren einer jeden Kombination zur Erreichung der Soll-Größen angesteuert werden können. Die Kostenfunktion wird vorteilhafterweise auf die Menge derjenigen Aktuatoren angewendet, für die bereits geprüft wurde, dass bei einer Ansteuerung der Aktuatoren die fahrdynamischen Rahmenbedingungen eingehalten werden. Die Kostenfunktion berücksichtigt vorteilhafterweise Abweichungen von den aus der ermittelten Soll-Trajektorie abgeleiteten Soll-Größen. Die Kostenfunktion wird dann vorteilhafterweise in Bezug auf eine möglichst geringe Abweichung von den Soll-Größen minimiert. Insbesondere ist jedoch vorgesehen, dass die Kostenfunktion in Bezug auf eine Abweichung von den ermittelten Soll-Größen Null ergibt. Insbesondere wenn dies aber nicht realisierbar sein sollte, soll die Abweichung von den Soll-Größen möglichst gering gehalten werden. Auf diese Weise lassen sich besonders geeignet diejenigen Aktuatoren beziehungsweise lässt sich besonders geeignet diejenige Kombination von Aktuatoren bestimmen, die zur Umsetzung der Soll-Größen angesteuert werden sollen beziehungsweise soll. Insbesondere wird die Kombination der Aktuatoren derart berechnet, dass die Kostenfunktion, die insbesondere die erzeugten Soll-Größen als Funktion der Aktuatorkräfte und/oder Aktuatormomente und/oder Aktuatorzustände beschreibt, vorteilhafterweise entsprechend minimiert wird.

Insbesondere sieht eine weitere mögliche Ausgestaltung des Verfahrens vor, dass bei der Erzeugung der Soll-Trajektorie eine longitudinale Richtung und eine laterale Richtung für die Soll-Trajektorie berücksichtigt werden. Insbesondere hat sich gezeigt, dass so eine weiter verbesserte Ansteuerung der Aktuatoren des Kraftfahrzeugs erreicht werden kann, um eine weiter verbesserte Einhaltung der Soll-Trajektorie zu realisieren.

Weiter vorteilhaft wird zur Beschreibung einer Ist-Trajektorie des Kraftfahrzeugs ein Koordinatensystem angewendet, wobei das Koordinatensystem vorteilhafterweise eine Weglänge, einen Abstand von einer Fahrtrichtungsvorgabe und eine Kurswinkelabweichung gegenüber der Fahrtrichtungsvorgabe verwendet, wobei die Fahrtrichtungsvorgabe vorteilhafterweise ebenfalls in eine Trajektorie transformiert wird. Vorteilhafterweise kann durch die Anwendung des Koordinatensystems eine verbesserte Basis für eine weiter verbesserte Ansteuerung der Aktuatoren erreicht werden. Insbesondere wird das Koordinatensystem unter Nutzung der Frenetschen Formeln erzeugt. Das Koordinatensystem ist somit insbesondere ein Frenet Koordinatensystem, insbesondere mit den Koordinaten Weglänge, Abstand und Kurswinkelabweichung.

Gemäß einer vorteilhaften Weiterbildung werden jeweils Ableitungen der Weglänge und des Abstandes von der Fahrtrichtungsvorgabe, die insbesondere einer als Trajektorie bereitgestellten Fahrtrichtungsvorgabe, bestimmt. Unter Nutzung der Ergebnisse der Ableitungen werden vorteilhafterweise eine Gierbeschleunigung des Kraftfahrzeugs und eine Kraftfahrzeugbeschleunigung in einem linearen System durch einen modellprädiktiven Regler (MPC; MPC: Model Predictive Controller) gesteuert. Insbesondere wird der Gierwinkel nicht direkt gesteuert, sondern nur für die Berechnungen verwendet. Vorteilhafterweise ermöglichen die ersten Ableitungen und zweiten Ableitungen der Weglänge und des Abstandes von der Fahrtrichtungsvorgabe eine Zustandsrückführung zur Linearisierung in der Zustandsraumgleichung. Weiter vorteilhaft nutzt der Regler die dritten Ableitungen der Weglänge und des Abstandes von der Fahrtrichtungsvorgabe. Die dritten Ableitungen der Weglänge und des Abstandes werden insbesondere verwendet, um die Bewegung einzuschränken, wodurch das System vorteilhafterweise besser kontrollierbar wird. Insbesondere können die dritten Ableitungen, also Rucke, minimiert werden, sodass die Bewegung gleichmäßiger wird. Die Fahrtrichtungsvorgabe berücksichtigt insbesondere die Gesamtbewegung des Kraftfahrzeugs.

Insbesondere sieht eine vorteilhafte Ausgestaltung vor, dass der Referenzgenerator eine Differenziereinheit, eine Grenzwertberechnungseinheit, einen modellprädiktiven Regler und eine Feedback-Linearisierungseinheit umfasst. Vorteilhafterweise bestimmt die Differenziereinheit jeweils Ableitungen der Weglänge und des Abstandes von der Fahrtrichtungsvorgabe. Die Grenzwertberechnungseinheit berechnet vorteilhafterweise anwendbare Grenzwerte basierend auf einem Zustand des Kraftfahrzeugs und vordefinierten Grenzwerten.

Das Berechnen der Grenzwerte mittels der Grenzwertberechnungseinheit hat insbesondere zwei Ziele. Der erste Ziel besteht darin, die Begrenzungen festzulegen, die aus einer externen Quelle stammen, insbesondere aus der Fahrtrichtungsvorgabe beziehungsweise der Trajektorie. Diese Begrenzungen betreffen insbesondere die Bogenlänge sowie deren erste und zweite Ableitung, also die Geschwindigkeit und die Beschleunigung entlang der Trajektorie, als die die Fahrtrichtungsvorgabe vorteilhafterweise verarbeitet wird, sowie die Abweichung von der Fahrtrichtungsvorgabe und deren erste und zweite Ableitung. Zusätzlich gibt es Begrenzungen für die Steuersignale des modellprädiktiven Reglers, die vorteilhafterweise die Ruckwerte sind. Das zweite Ziel besteht darin, realisierbare Begrenzungen für den modellprädiktiven Regler bereitzustellen, wenn der modellprädiktive Regler Probleme hat, weil die Begrenzungen nicht realisierbar sind.

Vorteilhafterweise wird unter Nutzung der Ergebnisse der Ableitungen und der anwendbaren Grenzwerte die Soll-Trajektorie des Kraftfahrzeugs in einem linearen System durch den modellprädiktiven Regler und die Feedback-Linearisierungseinheit bestimmt. Durch eine Umordnung der Systemgleichungen unter Nutzung der Feedback-Linearisierungseinheit ist es dabei vorteilhafterweise möglich, einige nicht messbaren Werte, zum Beispiel die Ableitung der Bogenlängenvariablen, aus gemessenen Signalen zu berechnen. Dadurch werden die Systemgleichungen, die der modellprädiktive Regler lösen muss, linear. Die Lösung dieses linearen Problems kann wiederum - mit einer weiteren Umordnung der Systemgleichungen - in Kombination mit den gemessenen Signalen verwendet werden, um eine Lösung für das nichtlineare System zu liefern.

Vorteilhafterweise berechnet der modellprädiktive Regler zudem Rucke. Rucke sind die Ableitung von beschleunigungsähnlichen Signalen. So ist beispielsweise für die Bogenlänge die zweite Ableitung die Beschleunigung, und die dritte Ableitung entspricht dem Ruck. Es gibt insbesondere zwei Gründe für die Verwendung von Rucken beziehungsweise Ruckwerten. So sollen vorteilhafterweise die Beschleunigungen gesteuert und begrenzt werden. Ein vorteilhafter Weg, dies zu tun, ist die Verwendung des Rucks als Steuersignal. Da plötzliche Änderungen der Beschleunigung, also hohe Ruckwerte, für Fahrzeugnutzer unangenehm sind, ist es vorteilhaft, dass die Rucke von dem Regler berechnet und begrenzt werden. Zudem sind Ruckwerte als Steuersignale besonders vorteilhaft, weil sie die Ableitung der zu steuernden Signale darstellen.

Eine weitere mögliche Ausgestaltung sieht vor, dass bei einer erkannten Abweichung von der Soll-Trajektorie aufgrund einer abweichenden Bewegungsrichtung des Kraftfahrzeugs eine Bewegungsrichtungskorrektur basierend auf einer Schätzung eines Schräglaufwinkels des Kraftfahrzeugs ausgeführt wird. Vorteilhafterweise kann ein Kraftfahrzeug so weiter verbessert stabilisiert und eine Bewegung im Sinne der Soll-Trajektorie realisiert werden.

Weiter vorteilhaft bewertet der Referenzgenerator des Fahrzeugbewegungsteuerungssystems während eines Betriebs des Kraftfahrzeugs eine Fahrzeugstabilität mithilfe eines Phasenportraits. Insbesondere umfasst der Referenzgenerator hierfür zusätzlich eine Fahrzeugstabilitätsbewertungseinheit. Dem Phasenportrait liegt vorteilhafterweise ein Schräglaufwinkel des Kraftfahrzeugs und eine Giergeschwindigkeit des Kraftfahrzeugs zugrunde. Insbesondere definieren der Schräglaufwinkel des Kraftfahrzeugs und die Giergeschwindigkeit des Kraftfahrzeugs dabei die Fahrzeugstabilität. Das Phasenportrait beschreibt insbesondere das Verhalten des Kraftfahrzeugs im Phasenraum und berücksichtigt dabei die Entwicklung der Zustandsvariablen des Kraftahrzeugs im Zeitverlauf. Das Phasenportrait liefert dabei vorteilhafterweise Informationen zur Fahrzeugstabilität, wobei insbesondere Bereiche, in denen das System stabil oder instabil ist, bestimmt werden. Das Phasenportrait hilft so vorteilhafterweise in Bezug auf die Fahrzeugdynamik zu erkennen, wie sich das Kraftfahrzeug bei verschiedenen Kombinationen von Schräglaufwinkel und Giergeschwindigkeit verhält, und ob es stabile oder instabile Zustände gibt, sodass vorteilhafterweise das Kraftfahrzeug weiter verbessert in einem stabilen Zustand gehalten werden kann.

Insbesondere ist vorgesehen, dass durch ein Erfassen eines Radlenkwinkels der gelenkten Räder des Kraftfahrzeugs und ein Erfassen einer longitudinalen Fahrzeuggeschwindigkeit des Kraftfahrzeugs ein Abstand von einer aktuellen Fahrzustandsposition des Kraftfahrzeugs in dem Phasenportrait zu einer Regionengrenze zwischen einer stabilen Region in dem Phasenportrait und einer instabilen Region in dem Phasenportrait bestimmt wird. Insbesondere wird der Abstand zwischen dem aktuellen Punkt beziehungsweise der aktuellen Fahrzustandsposition in dem Phasenportrait und der Grenze der stabilen Region oder der Abstand zwischen der Fahrzustandsposition, die insbesondere auch instabil sein kann, und einer stabilen Region bestimmt.

Vorteilhafterweise geht der bestimmte Abstand in die Steuerung der Fahrzeugaktuatoren ein, um so die Fahrstabilität weiter zu erhöhen. Vorteilhafterweise wird eine Aufrechterhaltung einer lateralen Fahrzeuggeschwindigkeit des Kraftfahrzeugs, insbesondere eine Aufrechterhaltung einer lateralen Fahrzeuggeschwindigkeit und Gierrate des Kraftfahrzeugs, priorisiert, wenn der bestimmte Abstand zwischen einer aktuell noch stabilen Fahrzustandsposition und der Regionengrenze kleiner als ein festgelegter Grenzwert ist. Insbesondere priorisiert der modellprädiktive Regler eine Aufrechterhaltung einer lateralen Fahrzeuggeschwindigkeit des Kraftfahrzeugs, wenn der bestimmte Abstand zwischen der aktuellen stabilen Fahrzustandsposition und der Regionengrenze kleiner als ein festgelegter Grenzwert ist. Vorteilhafterweise wird so die Stabilität des Fahrzustands des Kraftfahrzeugs aufrechterhalten . Weiter vorteilhaft wird durch diese Priorisierung das Fahrverhalten des Kraftfahrzeugs von einem Fahrzeugnutzer als besser empfunden.

Vorteilhafterweise wird des Weiteren eine longitudinale Fahrzeuggeschwindigkeit des Kraftfahrzeugs reduziert, wenn eine aktuelle Fahrzustandsposition außerhalb der Regionengrenze liegt, uns somit insbesondere ein aktueller Fahrzustand des Kraftfahrzeugs instabil ist. Vorteilhafterweise wird so dazu beigetragen, die physische Stabilität und Kontrollierbarkeit des Fahrzeugs wieder herzustellen. Weiter vorteilhaft bleibt ein Fahrzeugnutzer während der Fahrt auf diese Weise weitgehend frei und ungestört von für ihn wahrnehmbaren Steuerungseingriffen, und am Stabilitätslimit wird vorteilhafterweise die Lenkabsicht des Fahrzeugnutzers berücksichtigt, indem die laterale Geschwindigkeit beibehalten wird, insbesondere auch wenn dies auf Kosten der Reduzierung der longitudinalen Geschwindigkeit geht.

Ein Reglereingriff ist somit vorteilhafterweise insbesondre dann vorgesehen, wenn das Kraftfahrzeug durch das Verlassen des stabilen Bereichs in einen instabilen Zustand gerät. In diesem Fall gibt es vorteilhafterweise keine festgelegte Grenze für den Abstand zu der Regionengrenze. Insbesondere erfolgt jedes Mal ein Eingriff, solange der Fahrzustand instabil ist, unabhängig von dem Abstand zu der Regionengrenze, um die Stabilität des Kraftfahrzeugs wiederherzustellen.

Gemäß einem weiteren vorteilhaften Aspekt ist vorgesehen, dass das Fahrzeugbewegungsteuerungssystem eine Parksteuerungseinheit umfasst, wobei bei einem Parkmanöver-Betrieb des Kraftfahrzeugs, bei dem ein Parkmanöver unter Nutzung der Parksteuerungseinheit autonom ausgeführt wird, die Soll-Trajektorie des Kraftfahrzeugs von dem Referenzgenerator in ein longitudinales Bewegungsprofil und ein laterales Bewegungsprofil zerlegt wird. Beim Ausführen des Parkmanövers steuert vorteilhafterweise ein longitudinaler Regler basierend auf dem longitudinalen Bewegungsprofil eine longitudinale Bewegung des Kraftfahrzeugs und ein lateraler Regler steuert vorteilhafterweise basierend auf dem lateralen Bewegungsprofil eine laterale Bewegung des Kraftfahrzeugs. Dadurch, dass die laterale und die longitudinale Bewegung separat gesteuert werden, kann vorteilhafterweise die Struktur des Reglers einfach gehalten werden.

Vorteilhafterweise beeinflusst der longitudinale Regler Radkräfte des Kraftfahrzeugs, die durch eine erzeugte longitudinale Fahrzeuggeschwindigkeit gesteuert werden, durch eine Ansteuerung wenigstens eines Bremsaktuators und/oder wenigstens eines Antriebsaktuators des Kraftfahrzeugs. Der laterale Regler beeinflusst vorteilhafterweise eine Änderungsgeschwindigkeit eines Lenkwinkels des Kraftfahrzeugs durch eine Ansteuerung wenigstens eines vorderen Lenkaktuators und/oder wenigstens eines hinteren Lenkaktuators des Kraftfahrzeugs, insbesondere sowohl in Vorwärts- als auch in Rückwärtsfahrtrichtung des Kraftfahrzeugs.

Das zur Lösung der eingangs genannten Aufgabe des Weiteren vorgeschlagene Fahrzeugbewegungsteuerungssystem, das ausgebildet ist, einen Betrieb, insbesondere ein Fahrmanöver, eines Kraftfahrzeugs zu beeinflussen, umfasst einen Referenzgenerator, eine Steuerungseinheit und eine Zuweisungseinheit. Das Fahrzeugbewegungsteuerungssystem ist dabei ausgebildet, in einem Kraftfahrzeug ein erfindungsgemäß ausgebildetes Verfahren auszuführen, insbesondere derart, dass das Kraftfahrzeug nach einem erfindungsgemäß ausgebildeten Verfahren betrieben wird. Vorteilhafterweise lassen sich so die in Bezug auf das vorgeschlagene Verfahren zum Betreiben eines Kraftfahrzeug erläuterten Vorteile mit dem vorgeschlagenen Fahrzeugbewegungsteuerungssystem realisieren. Weiter vorteilhaft umfasst das Fahrzeugbewegungsteuerungssystem eine Parksteuerungseinheit, insbesondere eine zur Steuerung der Ausführung eines autonomen Parkmanövers ausgebildete Parksteuerungseinheit.

Das darüber hinaus zur Lösung der eingangs genannten Aufgabe vorgeschlagene Kraftfahrzeug, insbesondere ein PKW (PKW: Personenkraftwagen), umfasst eine Mehrzahl von Aktuatoren zum Betreiben des Kraftfahrzeugs, insbesondere wenigstens eine Antriebseinheit, wenigstens eine Bremseinheit und/oder wenigstens ein Lenksystem; und ein Fahrzeugbewegungsteuerungssystem, insbesondere ein erfindungsgemäß ausgebildetes Fahrzeugbewegungsteuerungssystem. Das Kraftfahrzeug ist dabei ausgebildet, gemäß einem erfindungsgemäß ausgebildeten Verfahren betrieben zu werden. Das Fahrzeugbewegungsteuerungssystem umfasst dabei insbesondere einen Referenzgenerator, eine Steuerungseinheit und eine Zuweisungseinheit. Weiter vorteilhaft umfasst das Fahrzeugbewegungsteuerungssystem eine Parksteuerungseinheit. Der Referenzgenerator, die Steuerungseinheit und die Zuweisungseinheit sind dabei insbesondere für eine Interaktion miteinander verbunden, insbesondere für ein Übertragen von Daten und Informationen miteinander verbunden. Des Weitern ist insbesondere vorgesehen, dass das Fahrzeugbewegungsteuerungssystem mit den Aktuatoren des Kraftfahrzeugs kommunikativ verbunden ist, insbesondere mit den jeweiligen Aktuatorsteuereinheiten der Aktuatoren des Kraftfahrzeugs. Insbesondere lassen sich mit dem Kraftfahrzeug die in Bezug auf das vorgeschlagene Verfahren zum Betreiben eines Kraftfahrzeug beschriebenen Vorteile realisieren. Weiter vorteilhaft ist vorgesehen, dass das Kraftfahrzeug für einen autonomen Fahrbetrieb ausgebildet ist, insbesondere für ein autonomes Einparken, insbesondere unter Nutzung der Parksteuerungseinheit.

Weitere vorteilhafte Einzelheiten, Merkmale und Ausgestaltungsdetails der Erfindung werden im Zusammenhang mit den in den Figuren (nachfolgend Fig.: Figur) dargestellten Ausführungsbeispielen näher erläutert. Dabei zeigt:
- Fig. 1: in einer schematischen Darstellung ein Ausführungsbeispiel für ein erfindungsgemäß ausgebildetes Kraftfahrzeug;
- Fig. 2: in einer Blockschaltbilddarstellung ein Ausführungsbeispiel für ein erfindungsgemäß ausgebildetes Fahrzeugbewegungsteuerungssystem mit einem Kraftfahrzeug;
- Fig. 3: in einer stark vereinfachten Darstellung eine Bewegung eines Kraftfahrzeugs zur Erläuterung eines erfindungsgemäß ausgebildeten Verfahrens;
- Fig. 4: in einer Blockschaltbilddarstellung ein Ausführungsbeispiel für einen Referenzgenerator eines erfindungsgemäß ausgebildeten Fahrzeugbewegungsteuerungssystems;
- Fig. 5: in einer Blockschaltbilddarstellung ein Ausführungsbeispiel für eine Parksteuerungseinheit eines erfindungsgemäß ausgebildeten Fahrzeugbewegungsteuerungssystems; und
- Fig. 6: ein Beispiel für ein Phasenportrait bei der Ausführung eines erfindungsgemäß ausgebildeten Verfahrens gemäß einem weiteren Ausführungsbeispiel.

In den verschiedenen Figuren sind gleiche Teile in der Regel mit den gleichen Bezugszeichen versehen und werden daher mitunter auch jeweils nur im Zusammenhang mit einer der Figuren erläutert.

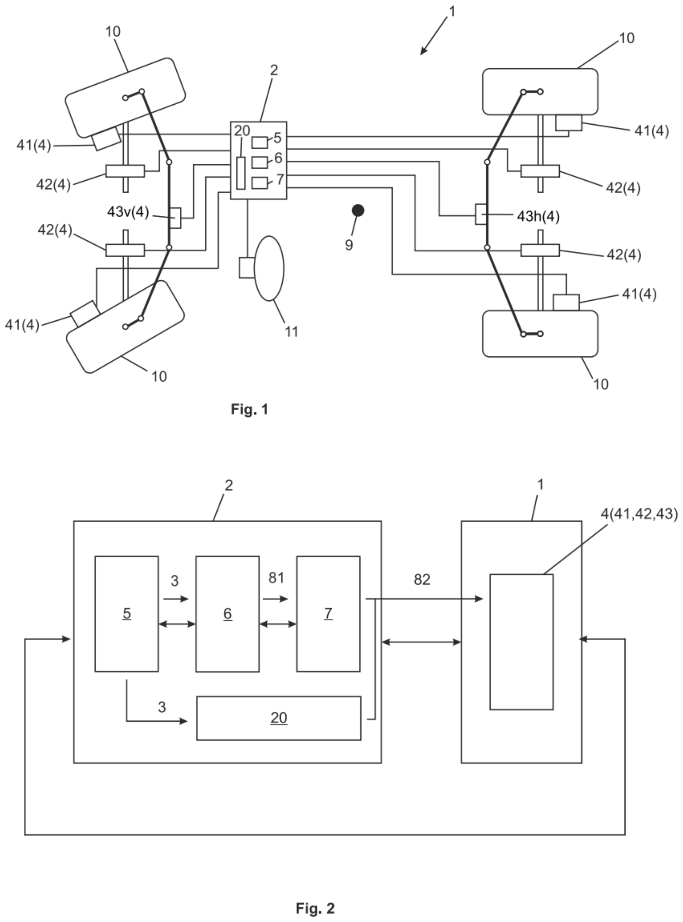

In Fig. 1 ist ein vorteilhaftes Ausführungsbeispiel für ein zweispuriges Kraftfahrzeug 1 mit vier Rädern 10 skizziert. Bei dem Kraftfahrzeug 1 kann es sich insbesondere um einen PKW handeln. Das Kraftfahrzeug 1 umfasst ein Fahrzeugbewegungsteuerungssystem 2, das einen Referenzgenerator 5, eine Steuerungseinheit 6, eine Zuweisungseinheit 7 und eine Parksteuerungseinheit 20 aufweist. Das Fahrzeugbewegungsteuerungssystem 2 ist dabei ausgebildet, aktuelle Fahrzustände des Kraftfahrzeugs 1, die insbesondere mittels entsprechender Sensoren (in Fig. 1 nicht explizit dargestellt) erfasst werden können, zu empfangen. Insbesondere ist das Fahrzeugbewegungsteuerungssystem 2 dazu ausgebildet, von einem Fahrzeugnutzer mittels einer Lenkhandhabe 11 eines Steer-by-Wire-Lenksystems des Kraftfahrzeugs 1 getätigte Lenkvorgaben zu erfassen.

Darüber hinaus ist das Fahrzeugbewegungsteuerungssystem 2 mit eine Fahrzeugbewegung beeinflussenden Aktuatoren 4 zur Übertragung von Signalen verbunden. Dabei ist in diesem Ausführungsbeispiel vorgesehen, dass jedem Rad 10 des Kraftfahrzeugs ein Bremsaktuator 41 zugeordnet ist, wobei jeder der Bremsaktuatoren 41 mit dem Fahrzeugbewegungsteuerungssystem 2 Signale austauschen kann. Des Weiteren ist jedem Rad 10 des Kraftfahrzeug ein Antriebsaktuator 42 zugeordnet. Jeder der Antriebsaktuatoren 42 kann dabei insbesondere wenigstens einen Elektromotor umfassen. Auch mit den Antriebsaktuatoren 42 kann das Fahrzeugbewegungsteuerungssystem 2 in diesem Ausführungsbeispiel Signale austauschen. Außerdem umfasst das Kraftfahrzeug 1 in diesem Ausführungsbeispiel einen vorderen Lenkaktuator 43v und einen hinteren Lenkaktuator 43h, über die eine Lenkvorgabe in eine Lenkbewegung der lenkbaren Räder 10 umgesetzt werden kann.

Beim Betrieb des Kraftfahrzeugs 1 ist der Referenzgenerator 5 ausgebildet, eine Soll-Trajektorie, der das Kraftfahrzeug 1 folgen soll, zu bestimmen. Die Steuerungseinheit 6 ist dabei weiter dazu ausgebildet, die erzeugte Soll-Trajektorie in Soll-Größen, insbesondere in Beschleunigungswerte, zu überführen, die an einem Gravizentrum 9 des Kraftfahrzeugs 1 aus der Soll-Trajektorie resultieren. Die Zuweisungseinheit 7 ist dazu ausgebildet, die erzeugten Soll-Größen in Steuergrößen zu überführen und diejenigen Aktuatoren 4 des Kraftfahrzeugs 1 zu bestimmen, die zur Erreichung der Soll-Größen angesteuert werden sollen, beispielsweise die Lenkaktuatoren 43v, 43h und zwei der Bremsaktuatoren 41. Für diese Zuweisung ist in der Zuweisungseinheit 7 in diesem Ausführungsbeispiel ein Zweispurmodell implementiert, das die Verbindung zwischen den Aktuatoren 4 und den am Fahrzeugschwerpunkt 9 wirkenden Soll-Größen beschreibt.

Einschränkungen der Aktuatordynamik sind dabei durch Gleichungen beschrieben, die die Zuweisungseinheit 7 bei der Bestimmung der anzusteuernden Aktuatoren 4 berücksichtigt. Die Zuordnung der Aktuatoren 4 für ein Realisieren der für den Fahrzeugschwerpunkt 9 geltenden Soll-Größen, erfolgt dabei in diesem Ausführungsbeispiel unter Nutzung einer hinterlegten Kostenfunktion, die insbesondere auch Abweichungen von den bestimmten Soll-Größen, berücksichtigt. Die Kostenfunktion wird dabei dafür verwendet auszuwählen, welche Aktuatoren in welcher Intensität genutzt werden, insbesondere welche Bremsen für das Bremsen genutzt werden und in welchem Maß sie eingesetzt werden. Entsprechend dem so bestimmten Ergebnis werden die anzusteuernden Aktuatoren 4 festgelegt und die ermittelten Aktuatoren 4 dann in der bestimmten Weise, die zur Erreichung der Soll-Größen und somit zur Einhaltung der Soll-Trajektorie erforderlich ist, angesteuert.

Die Zuweisungseinheit 7 ist dabei zudem dazu ausgebildet, eine Information bereitzustellen, wenn die bestimmten Soll-Größen nicht durch eine geeignete Ansteuerung von Aktuatoren 4 des Kraftfahrzeugs 1 umgesetzt werden können, das Kraftfahrzeug 1 also nicht der Soll-Trajektorie folgen kann. Die von der Zuweisungseinheit 7 bereitgestellte Information kann dann insbesondere dazu genutzt werden, die Fahrzeuggeschwindigkeit zu reduzieren, um das Kraftfahrzeug 1 möglichst in einen stabilen Zustand zu überführen, in dem das Kraftfahrzeug 1 den erfassten Vorgaben folgen kann.

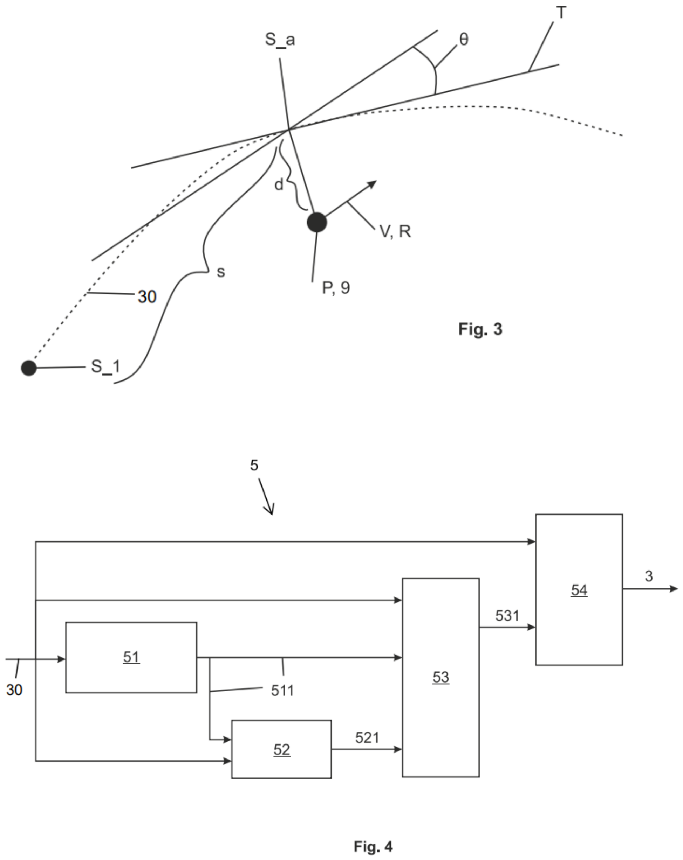

Unter Bezugnahme auf Fig. 2 und Fig. 3 wird nachfolgend ein vorteilhaftes Ausführungsbeispiel für ein Verfahren zum Betreiben eines zweispurigen Kraftfahrzeugs 1 mit einem Fahrzeugbewegungsteuerungssystem 2 beschrieben, insbesondere ein Verfahren zum Betreiben eines Kraftfahrzeugs 1, wie unter Bezugnahme auf Fig. 1 erläutert. Dabei werden auch verschiedene optionale Ausgestaltungsdetails beschrieben. In Fig. 2 ist dabei in einer Blockschaltbilddarstellung ein Fahrzeugbewegungsteuerungssystem 2 mit einem Kraftfahrzeug 1, dem das Fahrzeugbewegungsteuerungssystem 2 zugeordnet ist, gezeigt. In Fig. 3 ist in vereinfachter Darstellung beispielhaft eine Bewegung des Kraftfahrzeugs 1 gemäß einer Fahrtrichtungsvorgabe 30 beim Betreiben des Kraftfahrzeugs 1 skizziert, wobei das Kraftfahrzeug 1 in Fig. 3 nur durch einen Punkt, der das Gravizentrum 9 des Kraftfahrzeugs 1 repräsentieren soll, dargestellt ist.

Bei dem Verfahren zum Betreiben des zweispurigen Kraftfahrzeugs 1 mit einem Fahrzeugbewegungsteuerungssystem 2 bestimmt das Fahrzeugbewegungsteuerungssystem 2 für das Kraftfahrzeug 1 eine Soll-Trajektorie 3, der das Kraftfahrzeug 1 folgen soll, insbesondere basierend auf einer erfassten Fahrtrichtungsvorgabe, wobei die Fahrtrichtungsvorgabe insbesondere mehrere Fahrparameter beziehungsweise Fahrzustandswerte umfasst, insbesondere eine Fahrrichtung. Die Bestimmung der Soll-Trajektorie 3 basiert dabei insbesondere auf erfassten Fahrzustandswerten des Kraftfahrzeugs, insbesondere auf aktuellen Fahrzeuggeschwindigkeiten, weiter insbesondere auf longitudinalen Fahrzeuggeschwindigkeiten und lateralen Fahrzeuggeschwindigkeiten, aktuellen Fahrzeugbeschleunigungen, weiter insbesondere longitudinalen Fahrzeugbeschleunigungen und lateralen Fahrzeugbeschleunigungen, und/oder einer aktuellen Gierrate und erfassten Vorgaben für eine Fahrzeugbewegung des Kraftfahrzeugs, insbesondere einer erfassten Lenkvorgabe, einem eingestellten Radlenkwinkel, einer erfassten Beschleunigungspedalstellung und/oder einer erfassten Bremspedalstellung. Die Vorgaben für die Fahrzeugbewegung erfolgen dabei insbesondere durch eine entsprechende Betätigung von Eingabemitteln durch einen Fahrzeugnutzer und/oder durch ein Fahrerassistenzsystem.

Damit das Kraftfahrzeug 1 die Bewegung gemäß der Soll-Trajektorie 3 einhält, wirkt das Fahrzeugbewegungsteuerungssystem 2 steuernd auf die Fahrzeugbewegung des Kraftfahrzeugs 1 beeinflussende Aktuatoren 4 ein, insbesondere auf wenigstens einen Lenkaktuator 43v, 43h, wenigstens einen Bremsaktuator 41 und/oder wenigstens einen Antriebsaktuator 42. Darüber hinaus kann insbesondere auch vorgesehen sein, dass das Fahrzeugbewegungsteuerungssystem 2 auf ein aktives Feder-Dämpfungssystem des Kraftfahrzeugs 1 als weiteren Aktuator 4 einwirken kann.

Die Architektur des Fahrzeugbewegungsteuerungssystems 2 sieht dabei in diesem Ausführungsbeispiel vor, dass das Fahrzeugbewegungsteuerungssystem 2 jeweils als separate Einheit einen Referenzgenerator 5, eine Steuerungseinheit 6, eine Parksteuerungseinheit 20 und eine Zuweisungseinheit 7 umfasst. Der Referenzgenerator 5, die Steuerungseinheit 6, die Parksteuerungseinheit 20 und die Zuweisungseinheit 7 sind dabei kommunikativ miteinander verbunden, wobei insbesondere vorgesehen ist, dass Daten von dem Referenzgenerator 5 über die Steuerungseinheit 6 an die Zuweisungseinheit 7 übertragen werden und Daten von dem Referenzgenerator 5 an die Parksteuerungseinheit 20 übertragen werden. Dabei ist insbesondere aber auch ein bidirektionaler Austausch von Daten zwischen den Einheiten 5, 6, 7, 20 vorgesehen. Insbesondere kann auch vorgesehen sein, dass Daten direkt von der Zuweisungseinheit 7 an den Referenzgenerator 5 übertragen werden und/oder die Steuerungseinheit 6 mit der Parksteuerungseinheit 20 Daten austauscht.

Der Referenzgenerator 5 des Fahrzeugbewegungsteuerungssystem 2 erzeugt dabei die Soll-Trajektorie 3, gemäß der das Kraftfahrzeug 1 bewegt werden soll, und überträgt das Ergebnis an die Steuerungseinheit 6. Die Steuerungseinheit 6 bestimmt aus der erzeugten Soll-Trajektorie 3 Soll-Größen 81, insbesondere Beschleunigungswerte, die sich an einem Gravizentrum 9 des Kraftfahrzeugs 1 aus der Soll-Trajektorie 3 ergeben. Die bestimmten Soll-Größen 81 werden an die Zuweisungseinheit 7 des Fahrzeugbewegungsteuerungssystems 2 übertragen. Die Zuweisungseinheit 7 überführt die Soll-Größen 81 in Steuergrößen 82, insbesondere Soll-Kräfte, Soll-Lenkwinkel usw. Basierend auf einem Zweispurmodell für das Kraftfahrzeug 1 bestimmt die Zuweisungseinheit 7 diejenigen Aktuatoren aus der Gesamtheit der zur Verfügung stehenden Aktuatoren 4 des Kraftfahrzeugs 1, die angesteuert werden sollen, damit das Kraftfahrzeug 1 sich entsprechend den aus der Soll-Trajektorie 3 erzeugten Soll-Größen 81 verhält, wobei insbesondere auch eine für den Fall angepasste Signalausgabe als Informationsausgabe vorgesehen ist, dass eine Erreichung der Soll-Größen 81 durch eine Ansteuerung der Aktuatoren 4 nicht möglich ist, insbesondere aus physikalischen Gründen nicht möglich ist.

Für die basierend auf dem Zweispurmodell bestimmten Aktuatoren 4 werden von der Zuweisungseinheit 7 jeweils die entsprechenden Steuergrößen 82 an eine dem jeweiligen Aktuator 4 zugeordnete Aktuatorsteuereinheit (in den Figuren nicht explizit dargestellt) gesendet. Die jeweilige Aktuatorsteuereinheit steuert den Aktuator 4 dann so an, dass sich die Soll-Größen 81 im Gravizentrum 9 des Kraftfahrzeugs 1 einstellen.

Für die Ermittlung derjenigen Aktuatoren 4 des Kraftfahrzeugs 1, die für das Erreichen der Soll-Größen 81 angesteuert werden sollen, wird von der Zuweisungseinheit 7 anhand von hinterlegten Gleichungen und/oder anhand eines hinterlegten Gleichungssystems geprüft, ob für eine Erreichung der Soll-Größen 81 unter Nutzung eines oder mehrerer der Aktuatoren 4 vorgegebene fahrdynamische Rahmenbedingungen des jeweiligen Aktuators 4 eingehalten werden. Ergibt sich für einen Aktuator 4, dass die fahrdynamischen Rahmenbedingungen für diesen Aktuator 4 nicht eingehalten würden, so wird dieser Aktuator 4 von der Zuweisungseinheit 7 nicht für eine Ansteuerung zur Erreichung der Soll-Größen 81 ausgewählt beziehungsweise zugewiesen, wenn andere Aktuatoren 4 geeignet angesteuert werden können und dabei die fahrdynamischen Rahmenbedingungen eingehalten werden. Insbesondere werden nur solche Aktuatoren 4 zugewiesen, für die die fahrdynamische Rahmenbedingungen eingehalten werden. Kann eine solche Auswahl nicht getroffen werden, ist insbesondere vorgesehen, solche Aktuatoren 4, für die die fahrdynamischen Rahmenbedingungen nicht eingehalten würden, nur begrenzt anzusteuern.

Dabei wird von der Zuweisungseinheit 7 weiter unter Nutzung einer Kostenfunktion aus den mit den unter Nutzung der Gleichungen beziehungsweise des Gleichungssystem als zuweisbar ermittelten Aktuatoren eine Menge von Kombinationen von Aktuatoren 4 des Kraftfahrzeugs 1 bestimmt, wobei die Aktuatoren 4 einer jeden Kombination aus dieser Menge zur Erreichung der Soll-Größen 81 grundsätzlich angesteuert werden können. Die Kostenfunktion berücksichtigt dabei Abweichungen von den ermittelten Soll-Größen 81 und wird in Bezug auf eine möglichst geringe Anzahl anzusteuernder Aktuatoren 4 minimiert. Auf diese Weise wird dann letztlich konkret bestimmt, welche der Fahrzeugaktuatoren 4 zur Erreichung der Soll-Größen 81 wie angesteuert werden sollen.

Gemäß einer vorteilhaften Ausgestaltungsvariante ist zudem vorgesehen, dass bei der Erzeugung der Soll-Trajektorie 3 durch den Referenzgenerator 5 eine longitudinale Richtung und eine laterale Richtung für die Soll-Trajektorie 3 berücksichtigt werden. Weiter wird dabei zur Beschreibung einer Ist-Trajektorie des Kraftfahrzeugs 1 ein Koordinatensystem angewendet, wobei das Koordinatensystem eine in Fig. 3 beispielhaft dargestellte Weglänge s, einen Abstand d von einer Fahrtrichtungsvorgabe 30 und eine Kurswinkelabweichung θ gegenüber der Soll-Trajektorie 3 verwendet. In Fig. 3 ist dabei mit S_1 beispielhaft ein Start der Fahrtrichtungsvorgabe 30 dargestellt. S_a gibt eine aktuelle Soll-Position für das Kraftfahrzeug an, wobei die Distanz entlang der Fahrtrichtungsvorgabe 30 von S_1 bis S_a die Weglänge s beschreibt. Wie in Fig. 3 beispielhaft dargestellt, weicht dort die aktuelle Position P des Kraftfahrzeugs 1 um den Abstand d von der Fahrtrichtungsvorgabe 30 ab. Durch Parallelverschiebung des dargestellten Vektors, der die Fahrtrichtung R mit der Fahrzeuggeschwindigkeit V beschreibt, ergibt sich dann die Kurswinkelabweichung θ in Bezug auf die Fahrtrichtungsvorgabe 30.

In dem Referenzgenerator 5, der in einer vorteilhaften Ausgestaltung in Fig. 4 dargestellt ist, werden dabei die Ableitungen der Weglänge s und des Abstandes d von der Fahrtrichtungsvorgabe 30 bestimmt, um dann unter Nutzung der Ergebnisse der Ableitungen eine Gierbeschleunigung des Kraftfahrzeugs 1 und eine Kraftfahrzeugbeschleunigung in einem linearen System durch einen modellprädiktiven Regler 53 zu steuern, wobei der Regler 53 insbesondere die dritten Ableitungen der Weglänge s und des Abstandes d von der Fahrtrichtungsvorgabe 30, insbesondere die Rucke, als Steuersignale berechnet. Bei dem in Fig. 4 dargestellten Ausführungsbeispiel umfasst der Referenzgenerator 5 dabei neben dem modellprädiktiven Regler 53 eine Differenziereinheit 51, eine Grenzwertberechnungseinheit 52 und eine Feedback-Linearisierungseinheit 54. Die Differenziereinheit 51 bestimmt dabei die Ableitungen 511 der Weglänge s und des Abstandes d von der Fahrtrichtungsvorgabe 30 und leitet diese an die Grenzwertberechnungseinheit 52 und den modellprädiktiven Regler 53 weiter. Basierend auf einem aktuellen Zustand des Kraftfahrzeugs 1 und vordefinierten Grenzwerten berechnet die Grenzwertberechnungseinheit 52 für die Ergebnisse der Ableitungen 511 anwendbare Grenzwerte 521 und gibt diese an den modellprädiktiven Regler 53 weiter. Die Grenzwertberechnungseinheit 52 berechnet dabei insbesondere spezifische Grenzwerte für den modellprädiktiven Regler 53, wobei insbesondere Grenzwerte vordefiniert sind, die nicht überschritten werden dürfen, insbesondere Geschwindigkeitsbegrenzungen und/oder Grenzwerte, die basierend auf dem aktuellen Fahrzeugzustand berechnet werden.

Unter Nutzung der Eingangswerte, insbesondere der Weglänge s, des Abstandes d und der Kurswinkelabweichung θ, die insbesondere die Koordinaten eines Frenet Koordinatensystems sind, und weiterer Nutzung der Ergebnisse der Ableitungen 511 sowie Nutzung der anwendbaren Grenzwerte 521 berechnet der modellprädiktiven Regler 53 die resultierenden Rucke 531 des Kraftfahrzeugs 1 und gibt diese an die Feedback-Linearisierungseinheit 54 weiter, an die zudem die Eingangswerte, insbesondere die Weglänge s, der Abstand d und die Kurswinkelabweichung θ, übertragen werden. Der Ruck, der von dem modellprädiktiven Regler 53 bestimmt wird, ist die dritte Ableitung der Weglänge s und des Abstandes d von der Fahrtrichtungsvorgabe 30 und beschreibt insofern insbesondere eine Änderungsrate der Beschleunigung. Wenn diese Änderungsrate groß ist, führt dies zu einem sehr unangenehmen Gefühl für einen Fahrzeugnutzer. Die Rucke beziehungsweise entsprechenden Ruckwerte werden daher vorteilhafterweise verwendet, um die Beschleunigungen für einen Fahrzeugnutzer zu begrenzen.

Die Feedback-Linearisierungseinheit 54 erzeugt dabei letztlich die Soll-Trajektorie im linearen System, insbesondere Referenz-Gierwinkelrate und Geschwindigkeit, und gibt diese an die Steuerungseinheit 6 weiter.

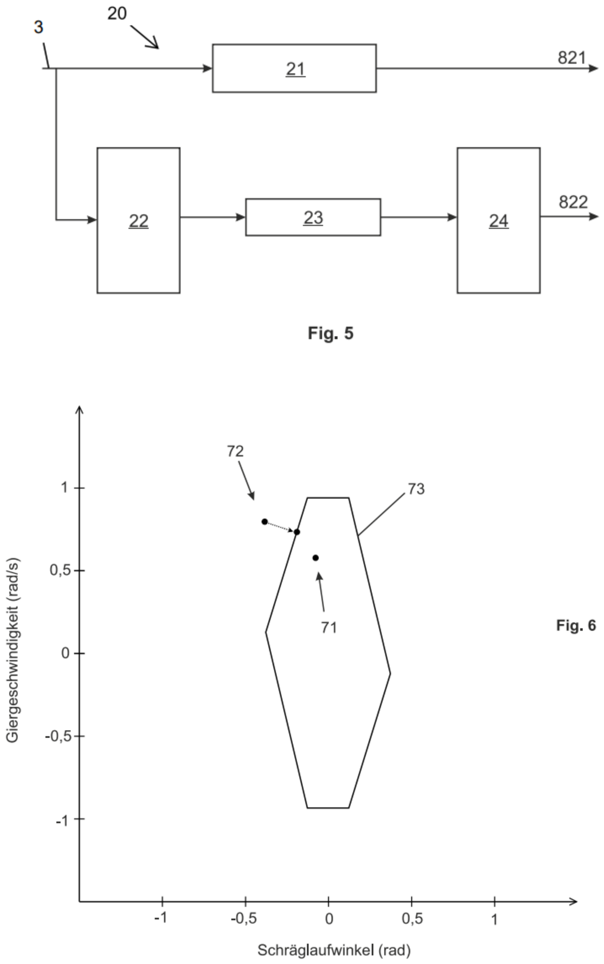

Gemäß einer vorteilhaften optionalen Ausgestaltung bewertet der Referenzgenerator 5 zudem während eines Betriebs des Kraftfahrzeugs 1 eine Fahrzeugstabilität mithilfe eines Phasenportraits, für das ein Beispiel in Fig. 6 dargestellt ist. Insbesondere ist hierfür vorgesehen, dass der Referenzgenerator 5 hierfür ergänzend eine Fahrzeugstabilitätsbewertungseinheit umfasst (in den Figuren nicht explizit dargestellt). Diesem Phasenportrait liegt dabei ein Schräglaufwinkel des Kraftfahrzeugs 1 (in Fig. 6 auf der Abszissenachse in rad (rad: Radiant) angegeben) und eine Giergeschwindigkeit des Kraftfahrzeugs 1 (in Fig. 6 auf der Ordinatenachse in rad/s (s: Sekunde) angegeben) zugrunde. Durch Erfassen einer Lenkvorgabe, die insbesondere von einem Fahrzeugnutzer über eine Lenkhandhabe 11 getätigt werden kann, wird von dem Referenzgenerator 5 ein Abstand von einer aktuellen Zustandsposition 71, 72 des Kraftfahrzeugs im Phasenportrait zu einer Regionengrenze 73 zwischen einer stabilen Region, die in Fig. 6 innerhalb der Regionengrenze 73 liegt, und einer instabilen Region, die in Fig. 6 außerhalb der Regionengrenze 73 liegt, im Phasenportrait bestimmt. Wenn der von dem Referenzgenerator 5 bestimmte Abstand zwischen einer aktuell noch stabilen Fahrzustandsposition 71 kleiner als ein festgelegter Grenzwert ist, wird eine Aufrechterhaltung einer lateralen Fahrzeuggeschwindigkeit und Gierrate des Kraftfahrzeugs 1 priorisiert und die longitudinale Fahrzeuggeschwindigkeit des Kraftfahrzeugs 1 reduziert. Der Referenzgenerator 5 kann somit unter Beachtung von Stabilitätskriterien die Soll-Trajektorie beeinflussen. In Fig. 6 kennzeichnen die obere und untere Begrenzung der Regionengrenze 73 jeweils Beschleunigungsgrenzen. Die Grenzen rechts seitlich oben und links seitlich unten der Regionengrenze 73 kennzeichnen den Übergang zu einem Untersteuern des Kraftfahrzeugs 1 und die Grenzen rechts seitlich unten und links seitlich oben der Regionengrenze 73 kennzeichnen den Übergang zu einem Übersteuern des Kraftfahrzeugs 1.

Das Phasenportrait wird also vorteilhafterweise verwendet, um eine stabile Soll-Trajektorie 3 für das Kraftfahrzeug 1 zu bestimmen. Insbesondere wird das Phasenportrait verwendet, um eine Fahrzeugbewegung des Kraftfahrzeugs 1 so zu beeinflussen, dass das Kraftfahrzeug aus einem instabilen Zustand in einen stabilen Zustand zurückkehrt. Vorteilhafterweise wird daher der Abstand insbesondere für einen Übergang zu instabilen Zuständen des Kraftfahrzeugs berechnet. Die Robustheit der Fahrzeugsteuerung und der Fahrzeugbewegung wird jedoch vorteilhafterweise dadurch erhöht, dass durch die Steuerung vermieden wird, dass der Fahrzeugzustand 71 der Regionengrenze 73 zu nahe kommt, selbst wenn sich dieser noch innerhalb der von der Regionengrenze 73 umgebenen Region befindet. Insofern ist die Abstandsberechnung vorteilhaft, wenn sich die Fahrzeugzustandsposition innerhalb des stabilen Bereichs, beispielsweise an der Fahrzeugzustandsposition 71, befindet, um so die Fahrzeugstabilität aufrecht zu erhalten. Tritt dennoch ein instabiler Fahrzeugzustand auf, so wird das Kraftfahrzeug vorteilhafterweise wieder in eine stabilen Fahrzeugzustand überführt.

Ist das Kraftfahrzeug 1 ein Kraftfahrzeug, das zur autonomen Ausführung eines Parkmanövers ausgebildet ist, weist das Fahrzeugbewegungsteuerungssystem 2 zusätzlich eine Parksteuerungseinheit 20 auf, wie auch beispielhaft in Fig. 2 gezeigt. Diese wird nachfolgend unter Bezugnahme auf Fig. 5 näher erläutert.

Die Parksteuerungseinheit 20 umfasst dabei einen longitudinalen Regler 21, eine lateralen Regler 23, eine Zustand-Transformationseinheit 22 und eine Steuersignal-Transformationseinheit 24. Der longitudinale Regler 21 steuert dabei die Längsgeschwindigkeit des Kraftfahrzeugs 1 und gibt entsprechend eine longitudinale Steuergröße 821 aus. Da dieses Signal bereits in einem linearen Modell kontrolliert werden kann, ist keine Signaltransformation erforderlich. Für den lateralen Regler 23, also die Quersteuerung, müssen die Trajektorien-Signale hingegen von dem Referenzgenerator 5 zuerst transformiert werden, insbesondere linearisiert werden. Dies erfolgt in diesem Ausführungsbeispiel durch die Zustandstransformationseinheit 22. Der laterale Regler 23 berechnet dann die Steuerungssignale, die von der Steuerungstransformationseinheit 24 zunächst zurücktransformiert werden, damit diese von den Aktuatoren 4 des Kraftfahrzeugs 1 entsprechend nutzbar sind. Ausgegeben werden dann dementsprechend laterale Steuergrößen 822.

Die Soll-Trajektorie 3 des Kraftfahrzeugs 1 wird bei diesem Ausführungsbeispiel für die Ausführung eines autonomen Parkmanövers, also nicht für einen normalen Fahrbetrieb, von dem Referenzgenerator 5 in ein longitudinales Bewegungsprofil und ein laterales Bewegungsprofil zerlegt. Für das Ausführen dieses Parkmanövers steuert dann vorteilhafterweise der longitudinale Regler 21 basierend auf dem longitudinale Bewegungsprofil die longitudinale Bewegung des Kraftfahrzeugs 1 und der laterale Regler 23 steuert zusammen mit der Zustands-Transformationseinheit 22 und der Steuersignal-Transformationseinheit 24 basierend auf dem lateralen Bewegungsprofil eine laterale Bewegung des Kraftfahrzeugs 1. Der longitudinale Regler 21 beeinflusst dabei insbesondere Radkräfte der Räder 10 des Kraftfahrzeugs 1, die durch eine erzeugte longitudinale Fahrzeuggeschwindigkeit gesteuert werden, durch eine Ansteuerung der Bremsaktuatoren 41 des Kraftfahrzeugs 1 und/oder durch eine Ansteuerung der Antriebsaktuatoren 42 des Kraftfahrzeugs 1. Der laterale Regler 23 dagegen beeinflusst insbesondere eine Änderungsgeschwindigkeit eines Radlenkwinkels des Kraftfahrzeugs 1 durch eine Ansteuerung des vorderen Lenkaktuators 43v des Kraftfahrzeugs 1 und/oder durch eine Ansteuerung des hinteren Lenkaktuators 43h des Kraftfahrzeugs 1, wobei dies insbesondere in beide Fahrtrichtungen erfolgt.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Kraftfahrzeug
- 2: Fahrzeugbewegungsteuerungssystem
- 3: Soll-Trajektorie
- 4: Aktuator des Kraftfahrzeugs
- 41: Bremsaktuator
- 42: Antriebsaktuator
- 43v: vorderer Lenkaktuator
- 43h: hinterer Lenkaktuator
- 5: Referenzgenerator
- 51: Differenziereinheit
- 52: Grenzwertberechnungseinheit
- 53: modellprädiktiven Regler
- 54: Feedback Linearisierungseinheit
- 511: Ableitungen
- 521: Grenzwerte
- 531: Rucke
- 6: Steuerungseinheit
- 7: Zuweisungseinheit
- 81: Soll-Größen
- 82: Steuergröße
- 821: longitudinale Steuergröße
- 822: laterale Steuergröße
- 9: Gravizentrum des Kraftfahrzeugs (1)
- 10: Rad
- 11: Lenkhandhabe
- 20: Parksteuerungseinheit
- 21: longitudinaler Regler
- 22: Zustand-Transformationseinheit
- 23: lateraler Regler
- 24: Steuersignal-Transformationseinheit
- 30: Fahrtrichtungsvorgabe
- 71: stabile Fahrzeugzustandsposition
- 72: instabile Fahrzeugzustandsposition
- 73: Regionengrenze
- S_1: Start der Soll-Trajektorie
- S_a: aktuelle Soll-Position
- s: Weglänge
- d: Abstand von der Soll-Trajektorie (3)
- P: aktuelle Position
- T: Tangente
- V: Fahrzeuggeschwindigkeit
- R: Fahrtrichtung
- θ: Kurswinkelabweichung

## Patentansprüche

1. Verfahren zum Betreiben eines zweispurigen Kraftfahrzeugs (1) mit einem Fahrzeugbewegungsteuerungssystem (2),
wobei das Fahrzeugbewegungsteuerungssystem (2) für das Kraftfahrzeug (1) eine Soll-Trajektorie (3), der das Kraftfahrzeug (1) folgen soll, bestimmt, und
wobei das Fahrzeugbewegungsteuerungssystem (2) zur Einhaltung der Soll-Trajektorie (3) steuernd auf Aktuatoren (4) des Kraftfahrzeugs (1), welche die Trajektorie des Kraftfahrzeugs beeinflussen, einwirkt,
**dadurch gekennzeichnet, dass**
das Fahrzeugbewegungsteuerungssystem (2) einen Referenzgenerator (5), eine Steuerungseinheit (6) und eine Zuweisungseinheit (7) umfasst,
wobei in einem Fahrbetrieb der Referenzgenerator (5) die Soll-Trajektorie (3) erzeugt, die Steuerungseinheit (6) die erzeugte Soll-Trajektorie (3) in Soll-Größen (81), insbesondere in Soll-Kräfte und/oder in Soll-Drehmomente und/oder in Soll-Beschleunigungen und/oder in Soll-Gierraten, überführt, die an einem Gravizentrum (9) des Kraftfahrzeugs (1) aus der Soll-Trajektorie (3) resultieren, und
wobei die Zuweisungseinheit (7) diejenigen Aktuatoren (4) des Kraftfahrzeugs (1) bestimmt, die zur Erreichung der Soll-Größen (81) an dem Gravizentrum (9) des Kraftfahrzeugs angesteuert werden sollen.

2. Verfahren nach Anspruch 1, **dadurch gekennzeichnet, dass** die Zuweisungseinheit (7) eine Information bereitstellt, wenn die Soll-Größen (81) nicht realisierbar sind.

3. Verfahren nach Anspruch 1 oder Anspruch 2, **dadurch gekennzeichnet, dass** die Zuweisungseinheit (7) die Soll-Größen (81) in Steuergrößen (82) für die bestimmten Aktuatoren (4) überführt, und die Zuweisungseinheit die Steuergrößen (82) jeweils an eine dem jeweiligen Aktuator (4) zugeordnete Aktuatorsteuereinheit überträgt.

4. Verfahren nach einem der vorstehenden Ansprüche, **dadurch gekennzeichnet, dass** ein das Kraftfahrzeug (1) beschreibendes Fahrzeugmodell einen Zusammenhang zwischen definierten Soll-Größen (81) und zuweisbaren Aktuatoren (4) beschreibt.

5. Verfahren nach einem der vorstehenden Ansprüche, **dadurch gekennzeichnet, dass** anhand von hinterlegten Gleichungen für die zuweisbaren Aktuatoren (4) geprüft wird, ob für eine Erreichung der Soll-Größen (81) unter Nutzung der bestimmten Aktuatoren (4) fahrdynamische Rahmenbedingungen des jeweiligen Aktuators (4) eingehalten werden, wobei die bestimmten Aktuatoren (4) derart angesteuert werden, dass die fahrdynamischen Rahmenbedingungen eines jeweiligen bestimmten Aktuators (4) eingehalten werden.

6. Verfahren nach einem der vorstehenden Ansprüche, **dadurch gekennzeichnet, dass** zur Beschreibung einer Ist-Trajektorie des Kraftfahrzeugs (1) ein Koordinatensystem angewendet wird, wobei das Koordinatensystem eine Weglänge (s), einen Abstand (d) von einer Fahrtrichtungsvorgabe (30) und eine Kurswinkelabweichung (θ) gegenüber der Fahrtrichtungsvorgabe (30) verwendet.

7. Verfahren nach Anspruch 6, **dadurch gekennzeichnet, dass** der Referenzgenerator (5) eine Differenziereinheit (51), eine Grenzwertberechnungseinheit (52), einen modellprädiktiven Regler (53) und eine Feedback-Linearisierungseinheit (54) umfasst, wobei die Differenziereinheit (51) jeweils Ableitungen (511) der Weglänge (s) und des Abstandes (d) von der Fahrtrichtungsvorgabe (30) bestimmt, wobei die Grenzwertberechnungseinheit (52) anwendbare Grenzwerte (521) basierend auf einem Zustand des Kraftfahrzeugs und vordefinierten Grenzwerten berechnet,
wobei unter Nutzung der Ergebnisse der Ableitungen (511) und der anwendbaren Grenzwerte (521) die Soll-Trajektorie (3) des Kraftfahrzeugs in einem linearen System durch den modellprädiktiven Regler (53) und die Feedback-Linearisierungseinheit (54) bestimmt wird.

8. Verfahren nach Anspruch 7, **dadurch gekennzeichnet, dass** der modellprädiktive Regler (53) Rucke (531) berechnet.

9. Verfahren nach einem der vorstehenden Ansprüche, **dadurch gekennzeichnet, dass** der Referenzgenerator (5) während eines Fahrbetriebs des Kraftfahrzeugs (1) eine Fahrzeugstabilität mithilfe eines Phasenportraits, dem ein Schräglaufwinkel des Kraftfahrzeugs (1) und eine Giergeschwindigkeit des Kraftfahrzeugs (1) zugrunde liegt, bewertet.

10. Verfahren nach Anspruch 9, **dadurch gekennzeichnet, dass** durch Erfassen eines Radlenkwinkels und einer longitudinalen Fahrzeuggeschwindigkeit des Kraftfahrzeugs (1) ein Abstand von einer aktuellen Fahrzustandsposition (71, 72) des Kraftfahrzeugs in dem Phasenportrait zu einer Regionengrenze (73) zwischen einer stabilen Region in dem Phasenportrait und einer instabilen Region in dem Phasenportrait bestimmt wird, wobei insbesondere die longitudinale Fahrzeuggeschwindigkeit des Kraftfahrzeugs (1) reduziert wird, wenn eine aktuelle Fahrzustandsposition (72) außerhalb der Regionengrenze (73) liegt.

11. Verfahren nach Anspruch 10, **dadurch gekennzeichnet, dass** eine Aufrechterhaltung einer lateralen Fahrzeuggeschwindigkeit und Gierrate des Kraftfahrzeugs (1) priorisiert wird, wenn der bestimmte Abstand zwischen einer aktuell noch stabilen Fahrzustandsposition und der Regiongrenze (73) kleiner als ein festgelegter Grenzwert ist.

12. Verfahren nach einem der vorstehenden Ansprüche, **dadurch gekennzeichnet, dass** das Fahrzeugbewegungsteuerungssystem (2) des Weiteren eine Parksteuerungseinheit (20) umfasst, wobei bei einem Parkmanöver-Betrieb des Kraftfahrzeugs (1), bei dem ein Parkmanöver unter Nutzung der Parksteuerungseinheit (20) autonom ausgeführt wird, die Soll-Trajektorie (3) des Kraftfahrzeugs (1) von dem Referenzgenerator (5) in ein longitudinales Bewegungsprofil und ein laterales Bewegungsprofil zerlegt wird, wobei beim Ausführen des Parkmanövers ein longitudinaler Regler (21) basierend auf dem longitudinalen Bewegungsprofil eine longitudinale Bewegung des Kraftfahrzeugs (1) steuert und ein lateraler Regler (23) basierend auf dem lateralen Bewegungsprofil eine laterale Bewegung des Kraftfahrzeugs (1) steuert.

13. Verfahren nach Anspruch 12, **dadurch gekennzeichnet, dass** der longitudinale Regler (21) Radkräfte des Kraftfahrzeugs, die durch eine erzeugte longitudinale Fahrzeuggeschwindigkeit gesteuert werden, durch eine Ansteuerung wenigstens eines Bremsaktuators (41) des Kraftfahrzeugs (1) und/oder durch eine Ansteuerung wenigstens eines Antriebsaktuators (42) des Kraftfahrzeugs (1) beeinflusst; und/oder **dass** der laterale Regler (23) eine Änderungsgeschwindigkeit eines Lenkwinkels des Kraftfahrzeugs (1) durch eine Ansteuerung wenigstens eines vorderen Lenkaktuators (43v) des Kraftfahrzeugs (1) und/oder durch eine Ansteuerung wenigstens eines hinteren Lenkaktuators (43h) des Kraftfahrzeugs (1) beeinflusst, wobei dies insbesondere in beide Fahrtrichtungen erfolgt.

14. Fahrzeugbewegungsteuerungssystem (2) zur Beeinflussung eines Betriebs eines Kraftfahrzeugs (1) mit einem Referenzgenerator (5), einer Steuerungseinheit (6) und einer Zuweisungseinheit (7), oder mit einem Referenzgenerator (5), einer Steuerungseinheit (6), einer Zuweisungseinheit (7) und einer Parksteuerungseinheit (20); wobei das Fahrzeugbewegungsteuerungssystem (2) ausgebildet ist, in einem Kraftfahrzeug (1) ein Verfahren nach einem der vorstehenden Ansprüche auszuführen.

15. Kraftfahrzeug (1) mit einer Mehrzahl von Aktuatoren (4) zum Betreiben des Kraftfahrzeugs (1) und mit einem Fahrzeugbewegungsteuerungssystem (2), insbesondere einem Fahrzeugbewegungsteuerungssystem (2) nach Anspruch 14, **dadurch gekennzeichnet, dass** das Kraftfahrzeug (1) ausgebildet ist, gemäß einem Verfahren nach einem der Ansprüche 1 bis 13 betrieben zu werden.
